# EUROPEAN PATENT SPECIFICATION

(11) **EP 3 524 443 B1**
(45) Date of publication and mention of the grant of the patent: **22.06.2022**
(21) Application number: 18156025.1
(22) Date of filing: 09.02.2018
(51) Int. Cl.: B60C 11/16

(54) **STUD BODY FOR A TRACTION DEVICE AND INSTALLATION METHOD**
SPIKEKÖRPER FÜR EINE TRAKTIONSVORRICHTUNG UND VERFAHREN ZUM EINBAUEN
CORPS DE CLOU POUR UN DISPOSITIF DE TRACTION ET PROCÉDÉ D'INSTALLATION

(43) Date of publication of application: 14.08.2019
(73) Proprietor: Spikesafe OY, 20360 Turku (FI)
(72) Inventor: HEIKKINEN, Lauri, 20360 Turku (FI); AALTONEN, Jarmo, 20360 Turku (FI); SALAKARI, Mikko, 20360 Turku (FI)
(74) Representative: Laine IP Oy

(56) References cited:
- EP-A1- 1 642 753
- EP-A1- 3 238 960
- JP-A- H1 053 008

## Description

### FIELD

The present invention relates to traction devices. In particular the present invention relates to winter tyres. More specifically, the present invention relates to a body of an anti-slip stud, to an anti-slip stud, to a traction device, and to an installation method of an anti-slip stud.

### BACKGROUND

Traction devices, such as pneumatic vehicle tyres, shoes, Nordic walking sticks etc., are typically equipped with anti-slip studs for improved traction on slippery surfaces. Indeed, anti-slip studs are very common in winter tyres for vehicles, the tread of which tyres are specifically designed to have stud holes for receiving such anti-slip studs. It is also common practice that the pin or pin, which is intended to bite into the terrain, has a rotationally non-symmetrical shape and is installed in a particular orientation in respect to the rotation axis of the tyre to maximize traction. The design principle behind such orientating is that the pin engages the terrain along its greatest dimension of extension. Due to said need to orientate the studs in respect to the rotation axis of the tyre, the installation of studs is challenging because the studs themselves are quite small. To aid automated installation, FI 114692 B discloses a special installation tool, which has been designed to match the particular shape of the bottom flange of the stud body. The bottom flange has been shaped as rotationally non-symmetrical so as to create a sturdy contact area for the gripper of the installation device. As the pin of the stud has been aligned in a particular relationship with the shape of the bottom flange, the orientation of the pin is possible by using the flange shape as reference. Thus orientation is more certain because the reference has a larger size than the pin.

US 2016/0311267 A1, on the other hand, discloses bottom flange featuring four chamfered corners that are connected by four wide and shallow concave sides.

EP 3238960 A1 discloses a stud with a rotationally non-symmetrical lower flange that has been provided with recesses.

EP 1642753 A1 discloses a stud with rotationally non-symmetrical upper flange that has been provided with recesses.

There is, however, a need to be able to carefully orientate the pins on studs while minimizing the size of the receptive stud hole or at least develop a useful alternative to existing solutions for providing traction devices with anti-slip studs.

### SUMMARY

The present invention provides a body of a stud for a friction surface of a traction device as defined in independent claim 1.

The present invention also provides a stud according to claim 15, a traction device according to claim 16 and a method according to claim 18.

Preferred embodiments are defined in the dependent claims.

Considerable benefits are gained with aid of the present solution. The recessed portion facilitates easy orientation of the hard metal pin. Due to the revelation that the recesses may be fairly narrow and shallow, the bottom flange may have an otherwise circular cross-section, whereby the receptive hole on the tyre may be small. Also, the recessed portion caters for installation with only three gripper fingers, which requires less space in the stud hole compared to four fingers. On top of that, by carefully selecting the shape and size of the recessed portion, considerably improvements may be had in torque resistance, i.e. the ability to resist rotation about the center axis of the stud.

Further benefits are discussed in connection with particular embodiments.

### BRIEF DESCRIPTION OF THE DRAWINGS

In the following certain embodiments are described in greater detail with reference to the accompanying drawings in which:
- FIGURE 1: illustrates a side elevation view of a stud body in accordance with at least some embodiments of the present invention;
- FIGURE 2: illustrates a bottom elevation view of the stud body of FIGURE 1;
- FIGURE 3: illustrates a bottom elevation view of a stud body in accordance with other embodiments of the present invention;
- FIGURE 4: illustrates a side elevation view of a stud body in accordance with yet other embodiments of the present invention;
- FIGURE 5: illustrates a bottom elevation view of the stud body of FIGURE 4, and
- FIGURE 6: a schematic illustration of the geometric relationship between a recess and the rest of the first head of a stud body when viewed from below.

### DETAILED DESCRIPTION OF EXEMPLARY EMBODIMENTS

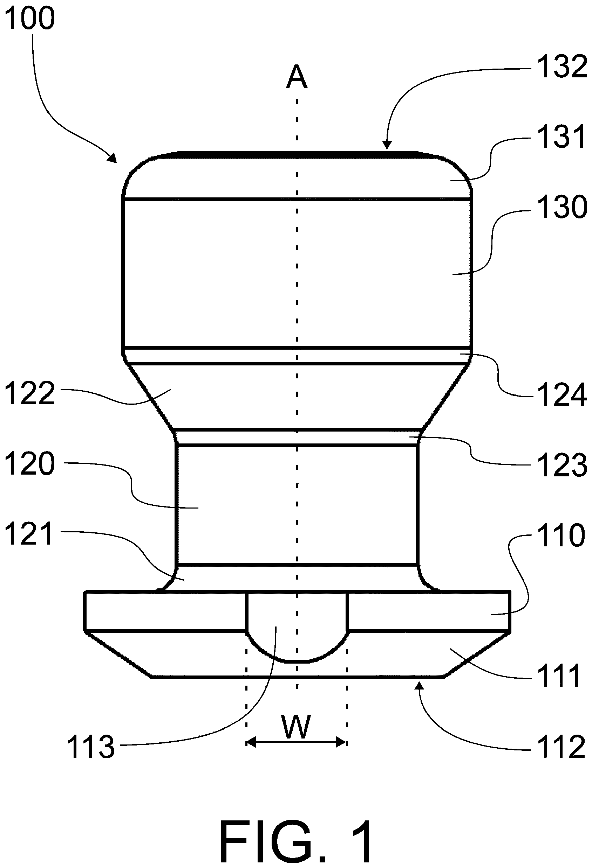

FIGURE 1 shows the side projection of a body 100 of a stud according to a first exemplary embodiment. In this context the word *stud* refers to an anti-skid insert which is used to improve the traction of various traction devices, such as tyres, traction mats, shoes, Nordic walking sticks, etc., on slippery surfaces. As can be seen, the body 100 exhibits an elongated shape which is relieved or "eased" for facilitating insertion into the traction surface of a traction device, such as a tyre. The body 100 has been elongated along a longitudinal axis which may be defined as the dimension in which the body 100 has its largest extension. Let us refer to this dimension as the first extending dimension A which will serve the purpose of setting the axis across which the shapes of the body are viewed as cross-sections.

The body 100 features three major portions, namely the first head 110 at one end of the body 100, the second head 130 at the opposing end of the body 100 in the first extending dimension A, and the intermediate portion 120 connecting the first head 110 and the second head 130. In the shown example, the first head 110 is the bottom flange of the body 100 and the second head 130 is the crown. The first head 110 has the largest diameter of the portions and features an easing which can be a chamfer or a rounding or a combination of the two connecting the side surface of the head 110 to the end surface 112. The second head 130 has a smaller diameter than the first head 110. The side surface of the second head 130 transitions to the end surface 132 through an easing which can be a chamfer or a rounding or a combination of the two. The intermediate portion 120 has the smallest diameter of the three portions and features four transitions 121, 122, 132, 124 from the first head 110 to the intermediate portion 120 and from the intermediate portion 120 to the second head 130. The particular body 100 shown in FIGURE 1 is also rotationally non-symmetrical in respect to the first extending axis A. In other words, the first head 110 has a rotationally non-symmetrical cross-section in a plane perpendicular to the main extending dimension A. While the second head 130 and/or the intermediate portion 120 may be rotationally symmetrical in respect to the first extending axis A, the first head 110 is not due to the recessed portion 113 or portions 113 rendering the cross-sectional shape of the first head 110 a non-circle.

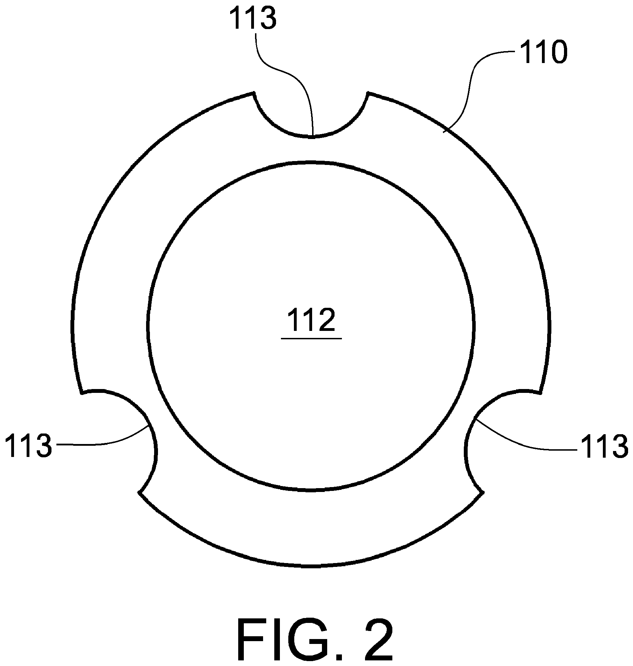

FIGURE 2, showing the body 100 from below, reveals the recessed portions 113 provided to the first head 110 more clearly. The lateral periphery - i.e. the side or circumferential surface of the first head 110 - has been provided with recessed portions 113, i.e. lateral sections of reduced diameter. The recessed portions 113 act on the side surface over a particular peripheral distance, i.e. they have a particular width, and to a particular radial depth, which shall be discussed separately. In the shown example, there are three recessed portions 113 spaced equally apart over the lateral periphery of the first head 110. The spacing could alternatively be unequal. The recessed portion 113 exhibit a concave cross-sectional shape which may be expressed as resembling the letter U.

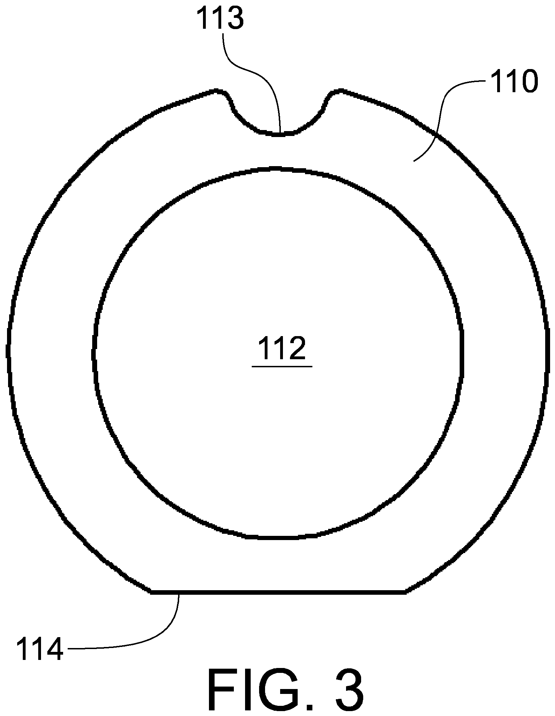

The embodiment shown in FIGURES 1 and 2 may be varied. FIGURE 3 shows a variation of the embodiment of FIGURE 2. In FIGURE 3, the lateral side surface of the first head 110 has been provided with only a single recessed portion 113 instead of three. Naturally, two recessed portion would be equally foreseeable. Additionally or alternatively, the lateral side surface of the first head 110 features a flat section 114, i.e. a chamfer, when viewed along the longitudinal axis of the body. The flat section 114 yields a manufacturing benefit in that it provides a reference orientation for the body. With the flat section 114 the body may be oriented in respect to the coordinate system of the manufacturing facility, whereby the orientation of the stud may be locked to a frame of reference. With the position and orientation of the stud known, the pin may be orientated correctly to the body within the same frame of reference, i.e. the coordinate system of the manufacturing facility. Now that the pin is in a certain mutual orientation in respect to the stud body, the stud may be installed appropriately into the tyre with the pin being orientated appropriately in respect to the rolling direction of the tyre.

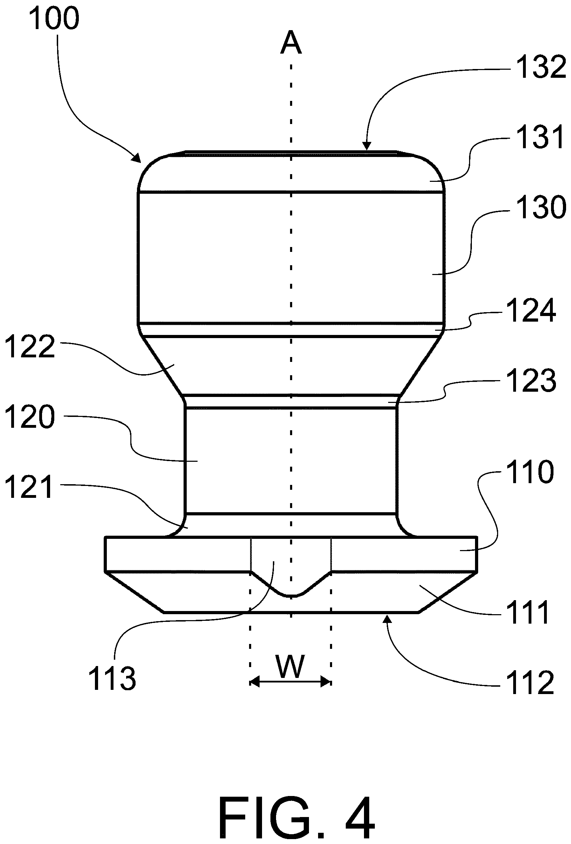

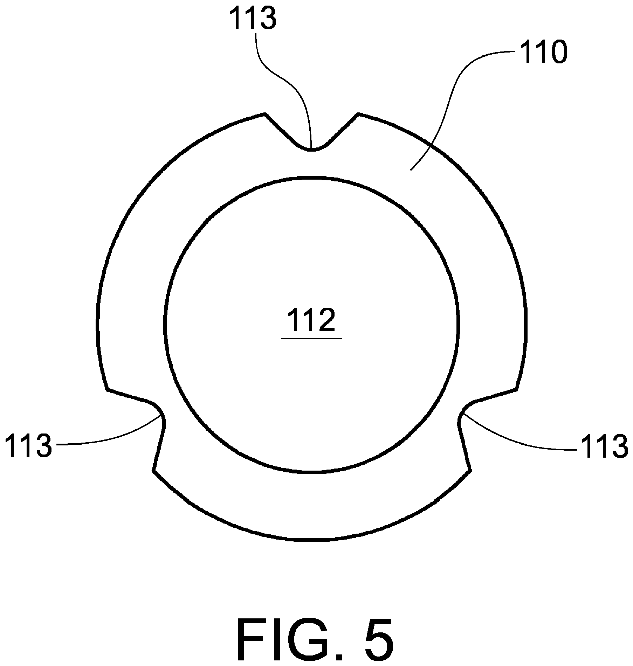

FIGURE 4 shows yet another variant. The body 100 features a generally similar overall construction than that shown in FIGURE 1 except for the shape of the recessed portions 113. Accordingly, the body 100 features a wide first head 110 acting as a flange, a narrower second head 130 acting as the crown, and a narrowest intermediate portion 120 connecting the two heads through transitions 121 - 124. FIGURE 5 shows the shape of the recesses 113 in better definition. As may be seen, the generally U-shaped recesses 113 of FIGURE 2 have been replaced by generally V-shaped ones in that the sides of the recesses are straight. The bottom of the recess 113 is rounded.

Based on FIGURES 1 to 5 it is apparent that the number and shape of the recessed sections 113 may be varied greatly. It is, however, preferred that the recessed portion 113 is shaped such to permit the body 100 to be grabbed by the gripper in at least partly embedded manner. This means that the recessed portion 113 is shaped to receive the "fingers" of the gripper such that the "fingers" contact the body 100 at the outline of the recessed portion 113. Also it is clear that the construction may be reversed in that the first head 110 will be used as the crown and the second head 130 as the bottom flange. Also, the narrow-necked intermediate portion 120 may be omitted making the body 100 a somewhat uniform in diameter or the intermediate portion may have the same diameter as the first or second head leaving the other head larger or smaller in diameter than the other.

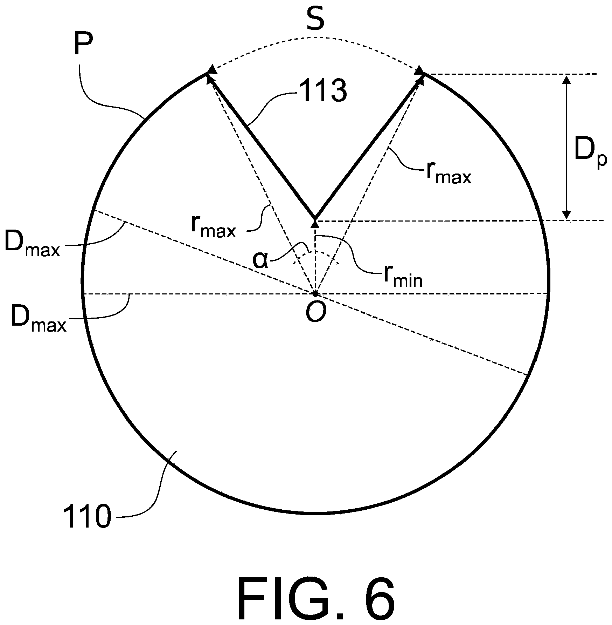

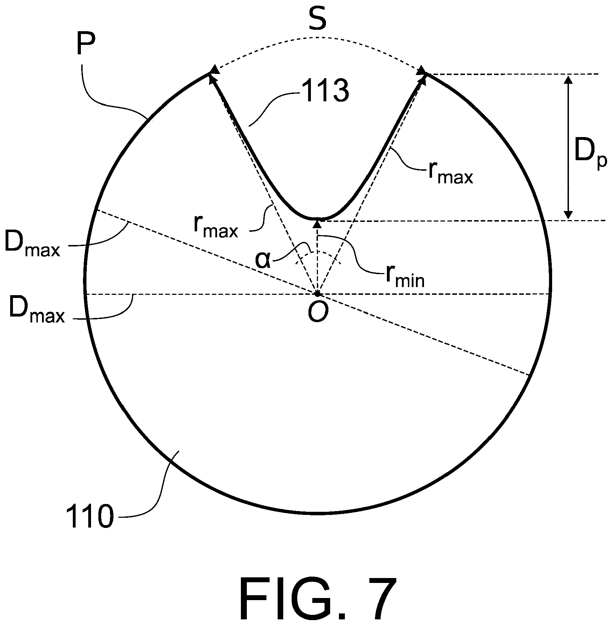

Let us turn now to the dimensions of the recessed portions 113 in greater detail by studying FIGURES 6 and 7 which are schematic simplifications of variants of FIGURE 5, wherein the first head includes only one recessed portion 113. In FIGURE 6, the bottom of the recessed portion 113 is sharp, whereas in FIGURE 7 the bottom of the recessed portion 113 is rounded. The explanations of the geometrical relationship between the recessed portion and first head shown in FIGURES 6 and 7 are, however, applicable to all embodiments described herein.

FIGURE 6 shows the recessed portion 113 as having the cross-sectional shape of a sharp V when viewed along the longitudinal axis of the body. Here the cross-sectional shape of the first head 110 is generally circular notwithstanding the recessed portion 113. In other words, the lateral periphery P has an equal maximum radius rₘₐₓ measured from the center, i.e. origo or pole O, outside the recess 113. Here, the center refers to the crossing point of two arbitrary lines drawn across the largest diameter of the first head 110 denoted by Dₘₐₓ. The largest diameter Dₘₐₓ gives a maximum radius rₘₐₓ by equation Dₘₐₓ = 2 · rₘₐₓ which in turn gives a circumference by equation 2 · π · rₘₐₓ. In this context the word *circumference* is derived from the largest diameter of the first head. The *scope,* on the other hand, is the arc length of the recessed portion across the polar azimuth formed between two. The center is not the mass center of the first head 110 because the recessed portion 113 is lacking material compared to the section exhibiting the largest diameter Dₘₐₓ. The recessed portion 113 acts on the lateral periphery P over a length which may be seen as the "width" W of the recess 113 when viewed from the side of the body 100. The recess 113 is therefore a lateral section of the lateral periphery P of a reduced diameter. In the shown example the recessed portion 113 is symmetrical in the sense that the minimum diameter is achieved at the center of the recessed portion 113.

In FIGURE 6, the radius and therefore the diameter of the first head 110 reduces linearly from the maximum rₘₐₓ to the minimum rmin and increases back to maximum rₘₐₓ giving the sides of the recess a straight shape. Also non-linear changes are possible to give the sides of the recess a curvaceous nature. In FIGURE 6, the minimum diameter of the first head 110 is at the bottom of the recessed portion 113 and is denoted with rₘᵢₙ. The difference between the minimum diameter at the bottom of the recessed portion 113 and maximum diameter outside the recess is the depth Dₚ of the recessed portion. What is also noteworthy is that the sections of the outline of the recessed portion 113 extend in a slanted angle in respect to the radius of the cross-section. The same holds true to the example of FIGURE 7 and indeed for all illustrated embodiments. To be more precise, the recessed portion 113 is defined by an outline which extends from the point of maximum diameter Dₘₐₓ to the point of minimum diameter Dmin at the bottom of the recessed portion 113 in an angle that is non-orthogonal angle in respect to the tangent at said point of maximum diameter. This means that the outline of the recessed portion 113 may be a sharp V-shape, a rounded V-shape, a U-shape, a C-shape, or any other shape in which the outline is not in a straight angle in respect to the tangent of the edge between the recessed portion and the portion exhibiting the maximum diameter.

FIGURES 6 and 7 show the nature of the recessed portion 113 in a polar coordinate system. In the illustration, an angle α over which the recessed portion 113 acts on the first head 110 will determine the scope S of the recessed portion 113 as a function of the radius of the first head 110 outside the scope of the recessed portion 113. In this context the word scope refers to scope peripheral or circumferential length of influence of the recessed portion 113. In other words, the azimuth angle α is formed between two maximum radii rₘₐₓ delimiting the recessed portion 113 there between. The origo or pole *O* is at the crossing point of two imaginary diameter lines Dₘₐₓ drawn across the cross-section at the largest diameter. This may approximately in the center of the cross-section of the recessed portion 113 when viewed along the longitudinal axis of the body 100, provided that the recessed portions 113 are relatively small. As said, the lateral periphery P is recessed over a width W which may be seen as the scope S in the polar coordinate system. To arrive at this definition let us consider that the point of the nearest maximum radius rₘₐₓ to the right-hand side of the recessed portion 113 forms a first point of measurement and that the point the nearest maximum radius rₘₐₓ to the left-hand side of recessed portion recess 113 forms a second point of measurement. In the polar coordinate system the opening angle of the recessed portion 113 is the polar azimuth angle α between the first and second point of measurement when the nearest maximum radii rₘₐₓ outside the recessed portion 113 defining the radial extent. Accordingly, the polar azimuth scope S of the recessed portion 113 is the difference in polar angle between the first and second point of measurement over the maximum radius rₘₐₓ.

The shape of the recessed portion 113 has been found to bear significance in how the stud body 100 is able to withstand rotation about the first extending dimension A, i.e. about the longitudinal axis of the body 100 according to the illustrated embodiments. Several physical modelling and tests were prepared on a Nokian Hakkapeliitta 7 tyre to study torque resistance. It was not at all self-evident which shape would yield the best results. The results of the tests are shown in Table 1.

**Table 1: Results of modelling and testing.**

| **#** | **A** | **B** | **C [%]** | **D [°]** | **E [%]** | **F [%]** |
|---|---|---|---|---|---|---|
| 1 | 0 | N/A | 0 | 0 | 0 | 100 |
| 2 | 1 | wide and deep U | 15.7 | 56.6 | 25 | 90.9 |
| 3 | 1 | narrow and deep chamfered U | 8.9 | 32.2 | 46 | 91.6 |
| 4 | 3 | narrow and deep chamfered U | 9.2 | 33.0 | 45 | 95.8 |
| 5 | 1 | radial deep U | 8.1 | 29.3 | 50 | 104.6 |
| 6 | 3 | radial deep U | 8.2 | 29.3 | 50 | 90.2 |
| 7 | 1 | radial shallow U | 6.8 | 24.7 | 47 | 107.4 |
| 8 | 3 | radial shallow U | 6.9 | 24.7 | 47 | 105.6 |
| 9 | 1 | wide and deep U | 10.7 | 38.4 | 42 | 94.7 |
| 10 | 3 | wide and deep U | 10.7 | 38.5 | 41 | 111.9 |
| 11 | 1 | narrow and shallow U | 7.7 | 27.7 | 39 | 123.2 |
| 12 | 3 | narrow and shallow U | 7.7 | 27.8 | 39 | 118.2 |
| 13 | 1 | narrow and deep V | 10.8 | 38.7 | 44 | 107.4 |
| 14 | 3 | narrow and deep V | 10.8 | 38.8 | 44 | 101.1 |
| 15 | 1 | narrow and shallow V | 7.5 | 27.1 | 36 | 113.0 |
| 16 | 3 | narrow and shallow V | 7.5 | 27 | 36 | 128.1 |
| 17 | 6 | narrow and shallow V with one maximum diameter section chamfered | 6.0 | 21.7 | 45 | 113 |
| 18 | 7 | narrow and shallow V with two maximum diameter sections chamfered | 9.1 | 32.8 | 30 | 108.9 |
| 19 | 3 | narrow and shallow V with one maximum diameter section chamfered | 17.1 | 61.5 | 16 | 112.3 |

wherein;
- #: stands for test number,
- A: stands for number of recessed portions,
- B: stands for the shape of the recessed portions,
- C: stands for the proportion of the scope S of a single recessed portion 113 in respect to the circumference of the first head 110,
- D: stands for the azimuth angle α of a single recessed portion 113,
- E: stands for relationship between the depth Dₚ and scope S of the recessed portion (Dₚ/S), and
- F: stands for the change in torque resistance.

The conclusion was that improvements in torque resistance was gained with relatively narrow and shallow recessed portions which preferably do not have "straight" walls, i.e. which do not extend radially from the periphery of the first head toward the center. Also, it was concluded that by adding recessed portions had little or no effect to torque resistance. Regarding the lateral width W of the recessed portion 113 it was seen that improvements are gained when the scope S is between 5 and 10 per cent of the circumference of the lateral periphery P of the first head 110. However, best gains were experienced at 7 to 8 per cent. As concerns the depth Dₚ of the recessed portion 113, improvement in torque resistance was gained when the depth Dₚ of the recessed portion 113 was between 15 to 50 per cent of the lateral scope S. However, best gains were experienced at 30 to 40 per cent. When viewed in a polar coordinate system, improvements were had when the azimuth angle α was selected between 25 and 30 degrees. A preferred subrange of the azimuth angle α is between 26 and 29 degrees, more particularly between 27 and 28 degrees.

The stud body as described above is applicable to serve as basis for an anti-slip insert which also includes a pin at either end. The pin may be a hard cermet piece or of other material which is more wear resistant than the body. The pin is preferably provided to the second head so that the first head may act as the bottom flange. According to such an embodiment, it is preferred that the bottom flange has a larger diameter than the second head so that the stud may be grabbed from the side with a gripper that extends along the first extending dimension of the stud.

Such a stud may be advantageously inserted into a receptive stud hole of a traction device, such as a tyre. First, the traction surface of the tyre, which may comprise a tread pattern, is provided with a stud hole. The stud is inserted by grabbing the stud by the bottom flange by means of an automated gripper which features a major extending component that is parallel to the main extending dimension of the body. An example of this would be gripping fingers which are parallel to the first extending dimension of the body. Upon gripping, the gripper engages a recessed portion in at least partly embedded manner so as to lock the rotational orientation of the stud in respect to the gripper. As the orientation of the pin is in a particular angle in respect to the location of the recessed portion, the orientation of the pin may be determined by the gripper which is positioned in a specific angle in respect to the first extending dimension of the stud body. In other words, the recessed portion will help in orientating the stud in an advantageous orientation in respect to the rolling surface of the tyre. As the recessed portion acts as an orientation indicator, the stud may have the maximum friction available against the driving surface.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention as defined in the appended claims.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

**REFERENCE SIGNS LIST**

| No. | Part | No. | Part |
|---|---|---|---|
| 100 | body | 131 | easing |
| 110 | first head | 123 | end surface |
| 111 | easing | A | first extending dimension |
| 112 | end surface | Dₚ | depth |
| 113 | recess | Dₘₐₓ | maximum diameter |
| 114 | chamfer | S | polar scope |
| 120 | intermediate portion | *O* | origo |
| 121 | transition | P | lateral periphery |
| 122 | transition | rₘₐₓ | maximum radius |
| 123 | transition | rmin | minimum radius |
| 124 | transition | α | angle |
| 130 | second head | w | width |

## Claims

1. A body (100) of a stud for a friction surface of a traction device, comprising:
- a first head (110) at one end of the body (100), the first head (110) exhibiting a height in a first extending dimension (A) of the body (100), wherein the first extending dimension of the body (100) is the main extending dimension in which the body (100) has the largest extension and wherein the first head (110) has a non-circular cross-sectional shape in a plane perpendicular to the first extending dimension (A), the lateral periphery (P) of the first head (110) comprising at least one recessed portion (113) which:
o exhibits a reduced diameter compared to the maximum diameter of the first head (110), when measured from the center (O) of the first head (110), wherein the difference between the minimum diameter at the bottom of the recessed portion (113) and maximum diameter outside the recessed portion (113) defines the depth (Dₚ) of the recessed portion (113),
o extends across the height of the first head (110) in the first extending dimension (A) of the body (100), and which recessed portion (113)
o acts on the lateral periphery (P) of the first head (110) over a lateral width (W), when viewed perpendicularly to the first extending dimension (A), and over a polar scope (S), when viewed along the first extending dimension (A), and
- a second head (130) at an opposing end of the body (100) in the first extending dimension (A),
**characterized in that**:
- the polar scope (S) of the recessed portion (113) is between 5 and 8 per cent of the circumference of the lateral periphery (P) of the first head (110), and **in that**
- the depth (Dₚ) of the recessed portion (113) is between 30 and 50 percent of the polar scope (S) of the recessed portion (113).

2. The body (100) of a stud according to claim 1, wherein the first head (110) is a bottom flange.

3. The body (100) of a stud according to claim 1 or 2, wherein the second head (130) is a bowl.

4. The body (100) of a stud according to any one of the preceding claims, wherein the lateral periphery (P) of the first head (110) is the outermost circumference from the center of the first head (110).

5. The body (100) of a stud according to any one of the preceding claims, wherein the first head (110) exhibits a cross-sectional shape taken in the first extending dimension (A) formed by a circular base shape which includes one peripherally provided recessed portion (113) or more than one peripherally provided recessed portions (113) spaced apart from each other.

6. The body (100) of a stud according to any one of the preceding claims, wherein the body (100) comprises an intermediate portion (120) connecting the first head (110) to the second head (130) in the first extending dimension (A), wherein the intermediate portion (120) has a smaller cross-section than the first head (110) or the second head (130) or both.

7. The body (100) of a stud according to any one of the preceding claims, wherein the recessed portion (113) acts on the lateral side of the first head (110) between two adjacent points of maximum diameter (Dₘₐₓ) of the first head (110).

8. The body (100) of a stud according to claim 7, wherein the recessed portion (113) is defined by an outline which extends from the point of maximum diameter (Dₘₐₓ) to the point of minimum diameter at the bottom of the recessed portion (113) in a non-orthogonal angle from the tangent at said point of maximum diameter of the first head (110) when viewed in cross-section taken along the first extending dimension.

9. The body (100) of a stud according to any one of the preceding claims, wherein the polar scope (S) of the recess (113) is between 7 and 8 per cent of the circumference of the lateral periphery (P) of the first head (110).

10. The body (100) of a stud according to any one of the preceding claims, wherein the depth (D) of the recessed portion (113) is between 30 and 40 per cent of the polar scope (S) of the recessed portion (113).

11. The body (100) of a stud according to any one of the preceding claims, wherein the recessed portion (113) extends across a polar scope (S) along which the recessed portion (113) acts on the lateral periphery (P) of the first head (110) between two nearest adjacent polar maximum radii (rₘₐₓ) in a cross-section of the first head (110) taken in the first extending dimension of the body (100), wherein the polar azimuth angle (α) of the recess (113) is between 25 and 30 degrees.

12. The body (100) of a stud according to claim 11, wherein the polar azimuth angle (α) of the recessed portion (113) is between 26 and 29 degrees, preferably between 27 and 28 degrees.

13. The body (100) of a stud according to any one of the preceding claims, wherein the body (100) comprises at most three of such recesses (113), preferably one or three.

14. The body (100) of a stud according to any one of the preceding claims, wherein lateral side surface of the first head (110) features a flat section (114), when viewed along the longitudinal axis of the body (100).

15. A stud comprising:
- a body (100) according to any one of the preceding claims, wherein the first head (110) is a bottom flange and wherein the second head (130) is a bowl, and
- a pin extending from the bowl, which pin is set in a pre-determined orientation with respect to the recess of the bottom flange.

16. A traction device, such as a pneumatic vehicle tyre, for engaging terrain in transport, the traction device comprising:
- a frame,
- a tread portion provided to the frame and configured to make contact the terrain, the tread portion comprising a tread pattern, which has been provided with stud recesses, and
- a plurality of studs installed into the recesses of the traction surface of the tread portion,
**characterized in that** the studs comprise bodies as defined in any of the preceding claims 1 to 14.

17. The traction device according to claim 16, wherein at least one stud is such as defined by claim 15.

18. A method for installing a stud as defined by claim 15 into the friction surface 2. of a traction device, the method comprising:
- providing a traction device with a tread portion, which has been provided with a stud hole,
- grabbing the stud by the bottom flange by means of an automated gripper comprising having a major extending component parallel to the main extending dimension of the body, wherein the gripper engages a recessed portion which extends across the height of the bottom flange on the lateral periphery thereof in at least partly embedded manner so as to lock the rotational orientation of the stud in respect to the gripper,
- orientating the stud into correct orientation by using the recess as an orientation indicator, and
- inserting the stud into the stud hole.

## Patentansprüche

1. Körper (100) eines Spikes für eine Reibungsfläche einer Traktionsvorrichtung, umfassend:
- einen ersten Kopf (110) an einem Ende des Körpers (100), wobei der erste Kopf (110) eine Höhe in einer ersten Ausdehnung (A) des Körpers (100) aufweist, wobei die erste Ausdehnung des Körpers (100) die Hauptausdehnung ist, in der der Körper (100) die größte Ausdehnung aufweist, und wobei der erste Kopf (110) eine nicht kreisförmige Querschnittform in einer Ebene senkrecht zu der ersten Ausdehnung (A) aufweist, wobei die seitliche Peripherie (P) des ersten Kopfs (110) mindestens einen vertieften Abschnitt (113) umfasst, der:
- einen verringerten Durchmesser verglichen mit dem maximalen Durchmesser des ersten Kopfs (110) aufweist, wenn vom Mittelpunkt (O) des ersten Kopfs (110) gemessen, wobei der Unterschied zwischen dem minimalen Durchmesser am Boden des vertieften Abschnitts (113) und dem maximalen Durchmesser außerhalb des vertieften Abschnitts (113) die Tiefe (Dₚ) des vertieften Abschnitts (113) definiert,
- sich über die Höhe des ersten Kopfs (110) in der ersten Ausdehnung (A) des Körpers (100) erstreckt, und welcher vertiefte Abschnitt (113)
- auf die seitliche Peripherie (P) des ersten Kopfs (110) über eine seitliche Breite (W), wenn senkrecht zu der ersten Ausdehnung (A) betrachtet, und über einen Polbereich (S), wenn entlang der ersten Ausdehnung (A) betrachtet, wirkt und
- einen zweiten Kopf (130) an einem entgegengesetzten Ende des Körpers (100) in der ersten Ausdehnung (A),
**dadurch gekennzeichnet, dass**:
- der Polbereich (S) des vertieften Abschnitts (113) zwischen 5 und 8 Prozent des Umfangs der seitlichen Peripherie (P) des ersten Kopfs (110) ist und dass
- die Tiefe (Dₚ) des vertieften Abschnitts (113) zwischen 30 und 50 Prozent des Polbereichs (S) des vertieften Abschnitts (113) ist.

2. Körper (100) eines Spikes nach Anspruch 1, wobei der erste Kopf (110) ein Bodenflansch ist.

3. Körper (100) eines Spikes nach Anspruch 1 oder 2, wobei der zweite Kopf (130) eine Schale ist.

4. Körper (100) eines Spikes nach einem der vorstehenden Ansprüche, wobei die seitliche Peripherie (P) des ersten Kopfs (110) der äußerste Umfang von dem Mittelpunkt des ersten Kopfs (110) ist.

5. Körper (100) eines Spikes nach einem der vorstehenden Ansprüche, wobei der erste Kopf (110) eine Querschnittform aufweist, in der ersten Ausdehnung (A) genommen, die durch eine kreisförmige Grundform gebildet wird, die einen peripher bereitgestellten vertieften Abschnitt (113) oder mehr als einen peripher bereitgestellten vertieften Abschnitt (113), die voneinander beabstandet sind, beinhaltet.

6. Körper (100) eines Spikes nach einem der vorstehenden Ansprüche, wobei der Körper (100) einen Zwischenabschnitt (120) umfasst, der den ersten Kopf (110) mit dem zweiten Kopf (130) in der ersten Ausdehnung (A) verbindet, wobei der Zwischenabschnitt (120) einen kleineren Querschnitt als der erste Kopf (110) oder der zweite Kopf (130) oder beide aufweist.

7. Körper (100) eines Spikes nach einem der vorstehenden Ansprüche, wobei der vertiefte Abschnitt (113) auf die seitliche Seite des ersten Kopfs (110) zwischen zwei benachbarten Punkten eines maximalen Durchmessers (Dₘₐₓ) des ersten Kopfs (110) wirkt.

8. Körper (100) eines Spikes nach Anspruch 7, wobei der vertiefte Abschnitt (113) durch eine Kontur definiert ist, die sich von dem Punkt eines maximalen Durchmessers (Dₘₐₓ) zu dem Punkt eines minimalen Durchmessers am Boden des vertieften Abschnitts (113) in einem nicht orthogonalen Winkel von der Tangente an dem Punkt eines maximalen Durchmessers des ersten Kopfs (110) erstreckt, wenn im Querschnitt, der entlang der ersten Ausdehnung genommen wurde, betrachtet.

9. Körper (100) eines Spikes nach einem der vorstehenden Ansprüche, wobei der Polbereich (S) der Vertiefung (113) zwischen 7 und 8 Prozent des Umfangs der seitlichen Peripherie (P) des ersten Kopfs (110) ist.

10. Körper (100) eines Spikes nach einem der vorstehenden Ansprüche, wobei die Tiefe (D) des vertieften Abschnitts (113) zwischen 30 und 40 Prozent des Polbereichs (S) des vertieften Abschnitts (113) ist.

11. Körper (100) eines Spikes nach einem der vorstehenden Ansprüche, wobei sich der vertiefte Abschnitt (113) über einen Polbereich (S) erstreckt, entlang dem der vertiefte Abschnitt (113) auf die seitliche Peripherie (P) des ersten Kopfs (110) zwischen zwei am nächsten liegenden, benachbarten, polaren, maximalen Radien (rₘₐₓ) in einem Querschnitt des ersten Kopfs (110) wirkt, der in der ersten Ausdehnung des Körpers (100) genommen wurde, wobei der polare Azimutwinkel (a) der Vertiefung (113) zwischen 25 und 30 Grad ist.

12. Körper (100) eines Spikes nach Anspruch 11, wobei der polare Azimutwinkel (a) des vertieften Abschnitts (113) zwischen 26 und 29 Grad, bevorzugt zwischen 27 und 28 Grad ist.

13. Körper (100) eines Spikes nach einem der vorstehenden Ansprüche, wobei der Körper (100) höchstens drei solcher Vertiefungen (113) umfasst, bevorzugt eine oder drei.

14. Körper (100) eines Spikes nach einem der vorstehenden Ansprüche, wobei eine seitliche Seitenfläche des ersten Kopfs (110) einen flachen Abschnitt (114) aufweist, wenn entlang der Längsachse des Körpers (100) betrachtet.

15. Spike, umfassend:
- einen Körper (100) nach einem der vorstehenden Ansprüche, wobei der erste Kopf (110) ein Bodenflansch ist und wobei der zweite Kopf (130) eine Schale ist, und
- einen Stift, der sich von der Schale erstreckt, der in einer vorab bestimmten Ausrichtung in Bezug auf die Vertiefung des Bodenflansches eingestellt ist.

16. Traktionsvorrichtung, wie ein pneumatischer Fahrzeugreifen, für einen Eingriff mit einem Terrain beim Transport, die Traktionsvorrichtung umfassend:
- ein Gestell,
- einen Laufflächenabschnitt, der an dem Gestell bereitgestellt ist und konfiguriert ist, um mit dem Terrain in Kontakt zu gelangen, wobei der Laufflächenabschnitt ein Laufflächenmuster umfasst, das mit Spikevertiefungen bereitgestellt ist, und
- eine Vielzahl von Spikes, die in den Vertiefungen der Traktionsoberfläche des Laufflächenabschnitts eingebaut sind,
**dadurch gekennzeichnet, dass** die Spikes Körper wie in einem der vorstehenden Ansprüche 1 bis 14 definiert umfassen.

17. Traktionsvorrichtung nach Anspruch 16, wobei mindestens ein Spike wie durch Anspruch 15 definiert ist.

18. Verfahren zum Einbauen eines Spikes wie durch Anspruch 15 definiert, in die Reibungsfläche einer Traktionsvorrichtung, wobei das Verfahren umfasst:
- Bereitstellen einer Traktionsvorrichtung mit einem Laufflächenabschnitt, der mit einem Spikeloch bereitgestellt ist,
- Erfassen des Spikes durch den Bodenflansch mit Hilfe eines automatischen Greifers, der eine Hauptausdehnungskomponente parallel zu der Hauptausdehnung des Körpers umfasst aufweist, wobei der Greifer mit einem vertieften Abschnitt in Eingriff gelangt, der sich über die Höhe des Bodenflansches an dessen seitlicher Peripherie mindestens teilweise eingebettet erstreckt, um so die Drehausrichtung des Spikes in Bezug auf den Greifer zu sperren,
- Ausrichten des Spikes in korrekter Ausrichtung unter Verwendung der Vertiefung als einen Ausrichtungsindikator und
- Einsetzen des Spikes in das Spikeloch.

## Revendications

1. Corps (100) d'un clou pour une surface de frottement d'un dispositif de traction, comprenant :
- une première tête (110) au niveau d'une extrémité du corps (100), la première tête (110) présentant une hauteur et une première dimension d'extension (A) du corps (100), dans lequel la première dimension d'extension du corps (100) est la dimension d'extension principale dans laquelle le corps (100) présente l'extension la plus grande et dans lequel la première tête (110) présente une forme en coupe transversale non circulaire dans un plan perpendiculaire à la première dimension d'extension (A), la périphérie latérale (P) de la première tête (110) comprenant au moins une portion évidée (113) qui :
- présente un diamètre réduit par rapport au diamètre maximal de la première tête (110), lorsqu'il est mesuré depuis le centre (O) de la première tête (110), dans lequel la différence entre le diamètre minimal au niveau du fond de la portion évidée (113) et le diamètre maximal à l'extérieur de la portion évidée (113) définit la profondeur (Dₚ) de la portion évidée (113),
- s'étend sur la hauteur de la première tête (110) dans la première dimension d'extension (A) du corps (100), et laquelle portion évidée (113)
- agit sur la périphérie latérale (P) de la première tête (110) sur une largeur latérale (W), lorsqu'elle est vue perpendiculairement à la première dimension d'extension (A), et sur une étendue polaire (S), lorsqu'elle est vue le long de la première dimension d'extension (A), et
- une seconde tête (130) au niveau d'une extrémité opposée du corps (100) dans la première dimension d'extension (A),
**caractérisé en ce que** :
- l'étendue polaire (S) de la portion évidée (113) est comprise entre 5 et 8 pour cent de la circonférence de la périphérie latérale (P) de la première tête (110), et **en ce que**
- la profondeur (Dₚ) de la portion évidée (113) est comprise entre 30 et 50 pour cent de l'étendue polaire (S) de la portion évidée (113).

2. Corps (100) d'un clou selon la revendication 1, dans lequel la première tête (110) est une bride inférieure.

3. Corps (100) d'un clou selon la revendication 1 ou 2, dans lequel la seconde tête (130) est une boule.

4. Corps (100) d'un clou selon l'une quelconque des revendications précédentes, dans lequel la périphérie latérale (P) de la première tête (110) est la circonférence la plus externe depuis le centre de la première tête (110).

5. Corps (100) d'un clou selon l'une quelconque des revendications précédentes, dans lequel la première tête (110) présente une forme en coupe transversale prise dans la première dimension d'extension (A) composée d'une forme de base circulaire qui inclut une portion évidée fournie en périphérie (113) ou plus d'une portion évidée fournie en périphérie (113) espacées les unes des autres.

6. Corps (100) d'un clou selon l'une quelconque des revendications précédentes, dans lequel le corps (100) comprend une portion intermédiaire (120) reliant la première tête (110) à la seconde tête (130) dans la première dimension d'extension (A), dans lequel la portion intermédiaire (120) présente une section transversale plus petite que la première tête (110) ou la seconde tête (130) ou les deux.

7. Corps (100) d'un clou selon l'une quelconque des revendications précédentes, dans lequel la portion évidée (113) agit sur le côté latéral de la première tête (110) entre deux points adjacents du diamètre maximal (Dₘₐₓ) de la première tête (110).

8. Corps (100) d'un clou selon la revendication 7, dans lequel la portion évidée (113) est définie par un contour qui s'étend du point du diamètre maximal (Dₘₐₓ) au point du diamètre minimal au fond de la portion évidée (113) selon un angle non orthogonal à partir de la tangente au niveau dudit point du diamètre maximal de la première tête (110), lorsqu'elle est vue en coupe transversale prise le long de la première dimension d'extension.

9. Corps (100) d'un clou selon l'une quelconque des revendications précédentes, dans lequel l'étendue polaire (S) de l'évidement (113) est comprise entre 7 et 8 pour cent de la circonférence de la périphérie latérale (P) de la première tête (110).

10. Corps (100) d'un clou selon l'une quelconque des revendications précédentes, dans lequel la profondeur (D) de la portion évidée (113) est comprise entre 30 et 40 pour cent de l'étendue polaire (S) de la portion évidée (113).

11. Corps (100) d'un clou selon l'une quelconque des revendications précédentes, dans lequel la portion évidée (113) s'étend sur une étendue polaire (S) le long de laquelle la portion évidée (113) agit sur la périphérie latérale (P) de la première tête (110) entre deux rayons maximaux polaires adjacents les plus proches (rₘₐₓ) en coupe transversale de la première tête (110) prise dans la dimension d'extension du corps (100), dans lequel l'angle d'azimut polaire (a) de l'évidement (113) est compris entre 25 et 30 degrés.

12. Corps (100) d'un clou selon la revendication 11, dans lequel l'angle d'azimut polaire (a) de la portion évidée (113) est compris entre 26 et 29 degrés, de préférence entre 27 et 28 degrés.

13. Corps (100) d'un clou selon l'une quelconque des revendications précédentes, dans lequel le corps (100) comprend au plus trois de ces évidements (113), de préférence un ou trois.

14. Corps (100) d'un clou selon l'une quelconque des revendications précédentes, dans lequel une surface côté latéral de la première tête (110) dispose d'une section plate (114), lorsqu'elle est vue le long de l'axe longitudinal du corps (100).

15. Clou comprenant :
- un corps (100) selon l'une quelconque des revendications précédentes, dans lequel la première tête (110) est une bride inférieure et dans lequel la seconde tête (130) est une boule, et
- une tige s'étendant de la boule, laquelle tige est placée dans une orientation prédéterminée par rapport à l'évidement de la bride inférieure.

16. Dispositif de traction, tel qu'un pneumatique de véhicule, destiné à venir au contact d'un terrain lors du transport, le dispositif de traction comprenant :
- un cadre,
- une portion de bande de roulement fournie sur le cadre et configurée pour entrer en contact avec le terrain, la portion de bande de roulement comprenant une sculpture de bande de roulement, laquelle ayant été dotée d'évidements pour clous, et
- une pluralité de clous installés dans les évidements de la surface de traction de la portion de bande de roulement,
**caractérisé en ce que** les clous comprennent des corps tels que définis dans l'une quelconque des revendications 1 à 14.

17. Dispositif de traction selon la revendication 16, dans lequel au moins un clou est tel que défini selon la revendication 15.

18. Procédé d'installation d'un clou selon la revendication 15 dans la surface de frottement d'un dispositif de traction, le procédé comprenant :
- la fourniture au dispositif de traction d'une portion de bande de roulement, qui a été dotée d'un trou de clou,
- la saisie du clou par la bride inférieure au moyen d'un préhenseur automatisé comprenant présentant une composante d'extension principale parallèle à la dimension d'extension principale du corps, dans lequel le préhenseur vient en prise avec une portion évidée qui s'étend sur la hauteur de la bride inférieure sur la périphérie latérale de celle-ci de manière au moins partiellement incorporée afin de verrouiller l'orientation de rotation du clou par rapport au préhenseur,
- l'orientation du clou dans l'orientation correcte en utilisant l'évidement comme repère d'orientation, et
- l'insertion du clou dans le trou de clou.
